(19) Europäisches Patentamt / European Patent Office / Office européen des brevets

(11) **EP 3 682 749 B1**

(12) **EUROPÄISCHE PATENTSCHRIFT**

(45) Veröffentlichungstag und Bekanntmachung des Hinweises auf die Patenterteilung:
**26.04.2023   Patentblatt 2023/17**

(21) Anmeldenummer: **20151347.0**

(22) Anmeldetag: **13.01.2020**

(51) Internationale Patentklassifikation (IPC):
**A24C 5/28** (2006.01)   **A24C 5/34** (2006.01)
**A47G 21/18** (2006.01)   **B29L 23/00** (2006.01)
**B29C 48/00** (2019.01)

(52) Gemeinsame Patentklassifikation (CPC):
**A24C 5/28; A24C 5/3412; A47G 21/18;**
B29C 48/09; B29L 2023/008

(54) **VERFAHREN ZUM BETREIBEN EINER MASCHINE DER TABAK VERARBEITENDEN INDUSTRIE UND ENTSPRECHENDE MASCHINE**

METHOD FOR OPERATING A MACHINE FOR THE TOBACCO INDUSTRY AND CORRESPONDING MACHINE

PROCÉDÉ DE FONCTIONNEMENT D'UNE MACHINE DE L'INDUSTRIE DE TRAITEMENT DU TABAC ET MACHINE CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2019   DE 102019101019**

(43) Veröffentlichungstag der Anmeldung:
**22.07.2020   Patentblatt 2020/30**

(73) Patentinhaber: **Körber Technologies GmbH**
**21033 Hamburg (DE)**

(72) Erfinder:
• **SAITOW, Viktor**
**21029 Hamburg (DE)**
• **GROTHAUS, Frank**
**26871 Papenburg (DE)**
• **HOFMANN, Nils**
**28870 Ottersberg (DE)**
• **GOLZ, Peter**
**21217 Seevetal (DE)**
• **PIECHACZEK, Roman**
**21502 Geesthacht (DE)**
• **LÜCKE, Felix**
**22087 Hamburg (DE)**
• **SCHAFFORZ, Mathias**
**21039 Börnsen (DE)**

(74) Vertreter: **Seemann & Partner Patentanwälte mbB**
**Raboisen 6**
**20095 Hamburg (DE)**

(56) Entgegenhaltungen:
CN-U- 203 040 662       DE-A1- 19 707 407
US-A- 3 334 240         US-A1- 2007 117 700
US-B1- 6 264 591

EP 3 682 749 B1

**Beschreibung**

Die Erfindung betrifft ein Verfahren zum Betreiben einer Maschine der Tabak verarbeitenden Industrie oder einer Maschine zur Herstellung von Trinkhalmen, wobei die Maschine wenigstens eine Strangmaschine, insbesondere der Tabak verarbeitenden Industrie oder der Trinkhalmindustrie, umfasst, wobei zunächst ein Strang hergestellt wird und der Strang in eine Mehrzahl von stabförmigen Produkten der Tabak verarbeitenden Industrie oder der Trinkhalmindustrie abgelängt wird.

Die Erfindung betrifft ferner eine Maschine zur Herstellung von stabförmigen Produkten der Tabak verarbeitenden Industrie oder der Trinkhalmindustrie, wobei die Maschine eine Strangmaschine umfasst, mittels der ein Strang der Tabak verarbeitenden Industrie oder der Trinkhalmindustrie herstellbar ist, wobei eine Ablängvorrichtung vorgesehen ist, mittels der die stabförmigen Produkte von dem Strang ablängbar sind, wobei eine Längenmessvorrichtung vorgesehen ist, die ausgebildet ist, die Länge der stabförmigen Produkte zu messen.

In der Tabak verarbeitenden Industrie und in der Trinkhalmindustrie ist es gewünscht, dass die hergestellten stabförmigen Produkte wie Filterstäbe, Zigaretten, Tabakstöcke oder Trinkhalme, eine vorgebbare möglichst gleichmäßige Länge aufweisen, da hierdurch die hergestellten fertigen Produkte eine gleichbleibend gute Qualität aufweisen. Zudem ist es für die Herstellung von Fertigprodukten, wie beispielsweise Filterzigaretten oder Heat-Not-Burn-Produkte oder Trinkhalmen, sinnvoll und notwendig, möglichst konstante Längen der stabförmigen Produkte und von Teilen der stabförmigen Produkte, beispielsweise Filtersegmenten oder Hohlröhrchen, vorzusehen.

Aus EP 1 397 961 B1 ist es bekannt, in einem Filterstabempfänger zur Förderung von Filterstäben in ein Filtermagazin u.a. die Länge der übermittelten Filterstäbe mehrfacher Gebrauchslänge mit einer optischen Messmethode zu bestimmen. Zudem wird überprüft, ob das Messergebnis innerhalb eines vorbestimmten Messtoleranzbereiches liegt, so dass eine Eingangskontrolle der Filterstäbe verbessert werden kann und damit schlussendlich die Qualität von hergestellten Filterzigaretten mit den geprüften Filtern gesteigert wird. Die Filterstäbe, die nicht im Toleranzbereich liegen, werden für die Weiterverarbeitung nicht zugelassen, sondern ausgeschleust.

Aus WO 03/055338 A2 ist eine Einrichtung zum Messen von Eigenschaften von Multisegmentfiltern bekannt, wobei in einem Durchlichtverfahren mit Licht geprüft werden kann, ob die vorgesehenen Filterbestandteile vorhanden sind und ob die Dichte der Filterbestandteile einer vorgebbaren Dichte entspricht. Auch hierbei werden die stabförmigen Produkte, die nicht im Toleranzbereich liegen, aus der weiteren Verarbeitung ausgeschlossen.

US 2007/0117700 A1 zeigt eine Vorrichtung zur Herstellung von Zigarettenfiltern. Unterschiedliche Typen von Filtersegmenten werden alternierend zu einem Filterstrang zusammengeführt, mit Papier umwickelt und zu Filtern geschnitten. Mittels Sensoren wird eine Länge von Filtersegmentteilen in den geschnittenen Filtern untersucht, um gegebenenfalls eine Phase anzupassen, mit der die Segmente zu einer Schneidvorrichtung zugefördert werden.

US 6 264 591 B1 zeigt ein System zur Herstellung von Zigarettenfiltern. Die Zigarettenfilter werden aus einem Filterstrang geschnitten, der alternierend unterschiedliche Filtersegmente umfasst. Das System stößt fehlerhafte Filter aus und ändert eine Schneidphase eines Schneidmessers basierend auf Daten eines Sensors.

Es ist Aufgabe der vorliegenden Erfindung, ein Verfahren zum Betreiben einer Maschine der Tabak verarbeitenden Industrie oder einer Maschine zur Herstellung von Trinkhalmen und eine entsprechende Maschine anzugeben, mittels der es möglich ist, qualitativ hochwertige stabförmige Produkte der Tabak verarbeitenden Industrie oder der Trinkhalmindustrie herzustellen, wobei insbesondere eine konstante Länge der stabförmigen Produkte gewährleistet sein soll.

Gelöst wird diese Aufgabe durch ein Verfahren zum Betreiben einer Maschine der Tabak verarbeitenden Industrie oder einer Maschine zur Herstellung von Trinkhalmen, wobei die Maschine wenigstens eine Strangmaschine der Tabak verarbeitenden Industrie oder der Trinkhalmindustrie umfasst, wobei zunächst ein Strang hergestellt wird und der Strang in eine Mehrzahl von stabförmigen Produkten der Tabak verarbeitenden Industrie oder der Trinkhalmindustrie abgelängt wird, wobei anschließend im laufenden Betrieb der Maschine die Länge der stabförmigen Produkte gemessen wird und auf Basis wenigstens eines Messwertes oder mehrerer Messwerte der Länge des stabförmigen Produkts ein Betriebsparameter der Strangmaschine, der Einfluss auf die Länge der stabförmigen Produkte hat, gesteuert oder geregelt wird, wobei das Messen der Länge der stabförmigen Produkte während des längsaxialen Förderns der stabförmigen Produkte geschieht, wobei wenigstens zwei Ortssensoren vorgesehen sind, mittels derer über eine Intensitätsmessung von elektromagnetischen Strahlen jeweils ein zeitlich variables Signal gemessen wird, wobei über den Abstand der Ortssensoren und den Zeitpunkt von Intensitätsschwankungen, die oberhalb einer vorgebbaren Größe liegen, die Länge des jeweiligen stabförmigen Produkts bestimmt wird.

Dadurch, dass im laufenden Betrieb der Maschine, d.h. online, die Länge der stabförmigen Produkte gemessen wird, und zwar in einem Moment, in dem die stabförmigen Produkte noch in der Maschine bzw. auf der Maschine gefördert werden, kann sehr effizient auf den Betriebsparameter der Strangmaschine, der Einfluss auf die Länge der stabförmigen Produkte hat, eingewirkt werden, so dass eine sehr hohe Verlässlichkeit einer vorgebbaren Länge bzw. eine hohe Stabilität der hergestellten Länge der stabförmigen Produkte ermöglicht wird. Vorzugsweise kann hierdurch auch die Verlässlichkeit oder Performance einer Maschine mit einer anderen gleichartigen Maschine verglichen werden.

Ein stabförmiges Produkt kann im Rahmen der Erfindung ein Trinkhalm, ein Hohlrohr, ein Filtersegment, ein Filterstab oder ein Heat-Not-Burn-Produkt sein.

Vorzugsweise ist der Betriebsparameter eine Fördergeschwindigkeit des Strangs, eine Fördergeschwindigkeit eines Formatbandes der Strangmaschine oder ein Takt oder eine Geschwindigkeit einer Ablängvorrichtung. Wenn sich beispielsweise über eine gewisse Zeit die Länge der stabförmigen Produkte im Mittel verringert, könnte die Fördergeschwindigkeit des Strangs höher geregelt oder gesteuert werden, um die Länge wieder zu vergrößern. Alternativ kann die Geschwindigkeit des Formatbandes vergrößert werden oder der Takt oder die Geschwindigkeit der Ablängvorrichtung verringert werden.

Unter dem Takt einer Ablängvorrichtung wird insbesondere eine Frequenz verstanden, innerhalb der die Ablängvorrichtung Schnitte durch den Strang durchführt. Die Ablängvorrichtung kann beispielsweise eine Messervorrichtung sein, die ein drehendes Organ umfasst und mit einer hohen Geschwindigkeit rotiert, so dass am Außenumfang angeordnete Schneiden mit einer relativ hohen Geschwindigkeit durch den Strang während der längsaxialen Förderung des Strangs hindurchtreten. Die Schneiden sind hierbei vorzugsweise so angeordnet bzw. werden auf eine Art durch den Strang gefördert, dass ein im Wesentlichen senkrechter Schnitt zur Längsachse ermöglicht wird. Derartige Messervorrichtungen bzw. Ablängvorrichtungen sind in der Tabak verarbeitenden Industrie hinlänglich bekannt.

Unter einer Geschwindigkeit einer Ablängvorrichtung wird insbesondere auch eine Drehzahl verstanden. Vorzugsweise wird der Betriebsparameter periodisch schwankend gesteuert oder geregelt. Wenn beispielsweise die gemessene Länge periodisch schwankend ist, beispielsweise so, dass jedes zweite stabförmige Produkt kürzer als das dazwischenliegende stabförmige Produkt ist, kann periodisch die Fördergeschwindigkeit des Strangs, die Fördergeschwindigkeit des Formatbandes oder der Takt oder die Geschwindigkeit der Ablängvorrichtung angepasst werden, um möglichst gleichlange stabförmige Produkte durchgehend zu erhalten.

Vorzugsweise wird eine statistische Auswertung der Längenmesswerte mehrerer stabförmiger Produkte durchgeführt. Hierbei wird beispielsweise überprüft, ob der Mittelwert sich mit der Zeit ändert oder ob sich die Standardabweichung beispielsweise ändert. Wenn vorzugsweise nach Abhängigkeit einer Veränderung des Mittelwertes und/oder der Standardabweichung der Längenmesswerte der Betriebsparameter gesteuert oder geregelt wird, kann so auch über einen langen Zeitraum eine konstante Länge der stabförmigen Produkte erzielt werden. Insbesondere kann hierüber auch erfasst werden, dass eine Komponente der Maschine der Tabak verarbeitenden Industrie, wie beispielsweise das Formatband oder entsprechende Messer der Messervorrichtung bzw. Ablängvorrichtung über die Zeit verschleißen, so dass auch der Zeitpunkt eines Austausches bzw. der Zeitpunkt einer Reparatur der entsprechenden Verschleißteile vorhergesagt werden kann.

Zudem ist es möglich, mehrere Längenmesswerte jedes stabförmigen Produkts vorzusehen, so dass auch das Längenmessen an sich gemittelt werden kann.

Vorzugsweise wird bei einer vorgebbaren Abweichung von einer Normalverteilung der Längenmesswerte mehrerer stabförmiger Produkte der Betriebsparameter periodisch an die Form der Abweichung angepasst. So können beispielsweise in einer Kurve, die die erfassten Messwerte aufaddiert über der Zeit darstellt, zwei Maxima vorliegen. Hieraus kann möglicherweise darauf zurückgeschlossen werden, dass die Messer der Messervorrichtung, für den Fall, dass zwei Messer auf der Messervorrichtung angeordnet sind, im Hinblick auf deren geometrische Form bzw. Anordnung oder Abstand entlang des Umfangs des Messerträgers sich verändert haben. In diesem Fall kann die Ablängvorrichtung bzw. die Schneidvorrichtung periodisch unterschiedlich schnell angetrieben werden, um einen derartigen Fehler zu kompensieren. Wenn eine derartige Kompensation schon vorgenommen wird und eine entsprechende Verteilung der Längenmesswerte entsteht, könnte auch ein anderer Fehler vorliegen oder eine andere Form eines Verschleißes.

Vorzugsweise wird bei einer Verteilung der Messwerte, die von einer Normalverteilung abweicht, der Betriebsparameter, insbesondere periodisch, an die Form der Abweichung angepasst.

Vorzugsweise geschieht das Messen der Länge des stabförmigen Produkts während des Förderns der stabförmigen Produkte in einer Richtung quer zur Längsachse der stabförmigen Produkte, wobei insbesondere mittels einer Abschattung der stabförmigen Produkte eine Position wenigstens einer Außenkante der stabförmigen Produkte bestimmt wird oder mittels wenigstens eines Sensors, der eine Produktoberfläche abtastet, die Position wenigstens einer Außenkante der stabförmigen Produkte ermittelt wird.

Es wird somit beim Messen versucht, die Außenkante bzw. die Außenkanten der Produkte möglichst genau zu bestimmen, um so die Länge der Produkte bestimmen zu können.

Wenn die stabförmigen Produkte in einer queraxialen Förderung entlang einer Förderkante laufen, ist nur ein Sensor zum Bestimmen der anderen Außenkante der jeweiligen stabförmigen Produkte notwendig.

Über den Abstand des gemessenen Ortes, an dem die andere Außenkante liegt, zu der Kante, an der die weitere Außenkante der stabförmigen Produkte entlanggeführt wird, ist dann die Länge einfach zu bestimmen. Wenn verhindert werden soll, dass durch das Fördern entlang einer Förderfläche das stabförmige Produkt an der Förderkante schaden bzw. eine Degradation erfährt, sollten wenigstens zwei Sensoren oder ein Flächensensor, der eine längsaxiale Erstreckung hat, die größer ist als die Länge der stabförmigen Produkte, verwendet werden. Es kann auch ein Liniensensor verwendet werden, der vorzugsweise eine Länge hat, die größer ist als die Länge der zu messenden stabförmigen Produkte.

Da das Messen der Länge der stabförmigen Produkte während des längsaxialen Förderns der stabförmigen Produkte, insbesondere in einer Richtung parallel zur Längsachse der stabförmigen Produkte, geschieht, kann noch schneller auf den Betriebsparameter eingewirkt werden.

Vorzugsweise wird mittels einer Kamera, die insbesondere ein Bild über die gesamte Länge eines stabförmigen Produktes aufnimmt, die Länge bestimmt. Die Kamera kann sowohl während der längsaxialen Förderung Verwendung finden als auch bei der queraxialen Förderung. Die Kamera nimmt hierbei vorzugsweise ein Bild des gesamten stabförmigen Produktes auf. Durch Bildbearbeitung kann dann die Länge bestimmt werden. Hierzu kann beispielsweise in der Nähe des stabförmigen Produktes ein Maßstab vorgesehen sein, der mittels der Kamera auch aufgenommen wird. Alternativ kann die Kamera auch nach einer entsprechenden Justage der Kamera im Hinblick auf die Längenmessung kalibriert werden. Die Längenmessung ist sehr genau möglich, da wenigstens zwei Ortssensoren vorgesehen sind, mittels derer über eine Intensitätsmessung, insbesondere von elektromagnetischen Strahlen, jeweils ein zeitlich variables Signal gemessen wird, wobei über den Abstand der Ortssensoren und den Zeitpunkt von Intensitätsschwankungen, die oberhalb einer vorgebbaren Größe liegen, die Länge des jeweiligen stabförmigen Produkts bestimmt wird. Diese Messung geschieht vorzugsweise auch bei der längsaxialen Förderung der stabförmigen Produkte, insbesondere wenn die stabförmigen Produkte dicht aneinander liegen, d.h. keine Lücke zwischen den stabförmigen Produkten vorliegen. Wenn beispielsweise zwei Ortssensoren vorgesehen sind, die sehr präzise einen Bereich des Förderweges der stabförmigen Produkte detektieren, ist eine genaue Messung möglich.

Beispielsweise kann der Abstand der Ortssensoren der Länge der jeweiligen stabförmigen Produkte entsprechen, so dass die beiden Ortssensoren zur gleichen Zeit ein Signal erzeugen, wenn die Kanten der stabförmigen Produkte jeweils von den beiden Ortsensoren detektiert werden. Bei Kenntnis des Abstandes der Ortssensoren ist so die Bestimmung der Länge des gemessenen stabförmigen Artikels möglich.

Als Ortssensor kann beispielsweise ein Kontrastsensor der Firma Sick AG, Waldkirch, Deutschland, verwendet werden, beispielsweise vom Typ KTS-M B9724115AM11Z.

Wenn vorzugsweise eine Blende verwendet wird, kann dieses sogar noch genauer erfolgen. Wenn allerdings die Intensitätsschwankung zu unterschiedlichen Zeiten geschieht, ist klar, dass das in dem Moment gemessene stabförmige Produkt eine Länge aufweist, die nicht der vorgegebenen Länge entspricht. Anhand des Zeitabstandes und der Geschwindigkeit des Strangs bzw. der stabförmigen Produkte im Bereich der Messung kann die Länge des Produktes bestimmt werden. Diese Messung ist insbesondere dann genau, wenn die vorgegebene Länge des stabförmigen Produktes eingehalten wird. Wenn die vorgegebene Länge nicht eingehalten wird, hängt die Genauigkeit dieser Messung auch von der Geschwindigkeit der stabförmigen Produkte ab. Wenn die Größe des Bereichs bekannt ist, der von einem Ortssensor auf dem stabförmigen Produkt abgetastet wird, kann über die Länge des Signals, das durch die Kante hervorgerufen wird, auf die Geschwindigkeit des stabförmigen Produkts zurückgeschlossen werden.

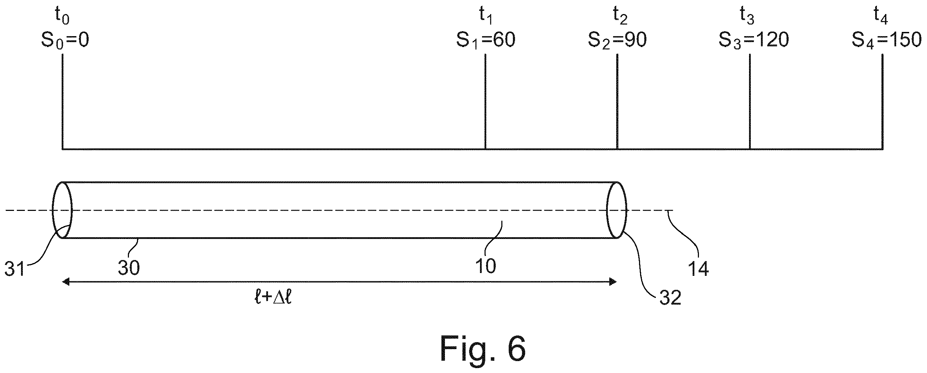

Um nicht von der Geschwindigkeit der stabförmigen Produkte bei der Messung der Länge abhängig zu sein, ist es sinnvoll, in längsaxialer Richtung hintereinander wenigstens drei Sensoren vorzusehen. So kann beispielsweise eine Längendifferenz dadurch berechnet werden, dass der Zeitpunkt des Vorliegen des Signals der Kante in Förderrichtung des hintersten Ortssensors minus der Zeit des Vorliegens des Signals der Kante beim ersten Sensor geteilt durch die Zeit des Vorliegens des Signals der Kante beim mittleren Sensor minus der Zeit des Vorliegens der Kante beim hinteren Sensor mal dem Abstand des mittleren zum hinteren Sensor berechnet wird. Dies wird noch weiter unter Bezugnahme auf die Fig. 6 näher erläutert.

Fig. 6 zeigt schematisch Positionen von fünf verschiedenen Sensoren. Die Positionen sind mit $S_0$=0, $S_1$=60, $S_2$=90, $S_3$=120 und $S_4$=150 dargestellt. Als Beispiel sind dieses mm. Im unteren Bereich der Fig. 6 ist ein stabförmiges Produkt 10 dargestellt mit den Außenkanten 31 und 32 und eine Längsachse 14. Dieses stabförmige Produkt 10 hat eine Länge I und eine Längendifferenz $\Delta$I. Wenn nur die Sensoren vorgesehen wären, die an den Positionen $S_0$ und $S_2$ vorliegen, die vorzugsweise einen Abstand aufweisen, der der Länge I entspricht, ergäbe sich eine Längendifferenz $\Delta$I zum Sollmaß I wie Folgt: $\Delta$I = v · ($t_2$ - $t_0$) = v · $t_{20}$. Im Rahmen der folgenden Erläuterung bedeutet $t_{20}$ das Gleiche wie $t_2$ - $t_0$. t ist der Zeitpunkt, zu dem eine entsprechende Kante detektiert wird. Sollten die beiden Sensoren an den Orten $S_0$ und $S_2$ gleichzeitig schalten, so ist $t_{20}$ = 0 und es gibt auch keine Abweichung $\Delta$I, sondern es ist die Solllänge I gemessen worden. Wenn mehrere Sensoren verwendet werden, kann bei bekannten geometrischen Abständen die Abweichung durch die jeweiligen Laufzeiten berechnet werden. Hierbei ergeben sich verschiedene Kombinationen:

$$I \; \Delta l = v \cdot t_{20}$$

$$II \; s_1 - s_2 = s_{12} = v \cdot t_{12} \xrightarrow{\frac{I}{II}} \frac{\Delta l}{s_{12}} = \frac{t_{20}}{t_{12}} \Longleftrightarrow \Delta l = \frac{t_{20}}{t_{12}} \cdot s_{12}$$

$$III\ s_{32} = v \cdot t_{32} \qquad \overset{I}{\underset{III}{\rightarrow}}\ \frac{\Delta l}{s_{32}} = \frac{t_{20}}{t_{32}} \Leftrightarrow \Delta l = \frac{t_{20}}{t_{32}} \cdot s_{32}$$

$$IV\ s_{42} = v \cdot t_{42} \qquad \overset{I}{\underset{IV}{\rightarrow}}\ \frac{\Delta l}{s_{42}} = \frac{t_{20}}{t_{42}} \Leftrightarrow \Delta l = \frac{t_{20}}{t_{42}} \cdot s_{41}$$

Hier bedeutet I/II, dass die Formel, die bei I dargestellt ist, durch die Formel bei II geteilt wird, um so zu den jeweiligen Thermen zu gelangen. Durch Umformen ergibt sich die Längendifferenz $\Delta l$.

Hierbei wird davon ausgegangen, dass die Geschwindigkeit in der genutzten Messstrecke, d.h. bei den maximalen Sensorabständen möglichst konstant ist, da ansonsten die Berechnungen von falschen Voraussetzungen ausginge.

Durch Verwendung von mehreren Sensoren kann auch eine Mittelung der einzeln berechneten Abweichung $\Delta l$ vorgenommen werden, um so die Genauigkeit zu erhöhen.

Durch das erfindungsgemäße Verfahren wird die Genauigkeit der Längenmessung deutlich erhöht. Es werden Genauigkeiten von 6/100 mm bis 8/100 mm erreicht.

Die Aufgabe wird ferner gelöst durch eine Maschine zur Herstellung von stabförmigen Produkten der Tabak verarbeitenden Industrie oder der Trinkhalmindustrie, wobei die Maschine eine Strangmaschine umfasst, mittels der ein Strang der Tabak verarbeitenden Industrie oder der Trinkhalmindustrie herstellbar ist, wobei eine Ablängvorrichtung vorgesehen ist, mittels der die stabförmigen Produkte von dem Strang ablängbar sind, wobei eine Längenmessvorrichtung vorgesehen ist, die ausgebildet ist, die Länge der stabförmigen Produkte zu messen, die dadurch weitergebildet ist, dass eine Auswertevorrichtung vorgesehen ist, die die Messwerte, die durch die Längenmessvorrichtung ermittelt worden sind oder ermittelt werden, auswertet, wobei die Auswertevorrichtung ausgebildet ist, ein Signal zur Steuerung oder Regelung eines Betriebsparameters der Strangmaschine, der Einfluss auf die Länge der stabförmigen Produkte hat, auszugeben, wobei das Messen der Länge der stabförmigen Produkte während des längsaxialen Förderns der stabförmigen Produkte geschieht, wobei wenigstens zwei Ortssensoren vorgesehen sind, mittels derer über eine Intensitätsmessung von elektromagnetischen Strahlen jeweils ein zeitlich variables Signal gemessen wird, wobei über den Abstand der Ortssensoren und den Zeitpunkt von Intensitätsschwankungen, die oberhalb einer vorgebbaren Größe liegen, die Länge des jeweiligen stabförmigen Produkts bestimmt wird.

Die Auswertevorrichtung ist hierbei zur Auswertung der Messungen der Länge der stabförmigen Produkte ausgelegt. Vorzugsweise ist die Auswertevorrichtung ausgebildet, ein Signal an eine Maschinensteuerung der Strangmaschine auszugeben.

Vorzugsweise bildet die Auswertevorrichtung zur Erzeugung des Signals einen Mittelwert einer vorgebbaren Anzahl an Längenmesswerten. Der Mittelwert kann ein Mittelwert von Messwerten eines stabförmigen Produkts und/oder einer Mehrzahl von stabförmigen Produkten sein.

Vorzugsweise ist die Längenmessvorrichtung in der Strangmaschine stromabwärts der Ablängvorrichtung angeordnet. Vorzugsweise ist in einer weiteren Alternative die Längsmessvorrichtung stromabwärts der Strangmaschine in einem Bereich vorgesehen, in der die stabförmigen Produkte queraxial förderbar sind, um bei gewissen stabförmigen Produkten, die beispielsweise im Schnittbereich keinen hohen Kontrast aufweisen, die Länge auch gut vermessen zu können, wie beispielsweise mit Kohleaktivgranulat versehene Filtertowmaterialien.

Zudem kann vorzugsweise in einer längsaxialen Förderbahn der stabförmigen Produkte eine Welle vorgesehen sein, mittels der die stabförmigen Produkte vorzugsweise zu den Sensoren hin bzw. zu dem Sensor hin ausgelenkt werden, um so einen Spalt zwischen zwei aufeinander folgenden Sensoren zu ermöglichen. Bei der Welle handelt es sich vorzugsweise um eine kleine Erhebung in der längsaxialen Förderbahn. So können Schnittkanten mit wenig Kontrast gut detektiert werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

Fig. 1     eine schematische Ansicht einer erfindungsgemäßen Maschine der Tabak verarbeitenden Industrie,

Fig. 2     eine weitere schematische Darstellung einer erfindungsgemäßen Maschine der Tabak verarbeitenden Industrie in einer anderen Ausführungsform,

Fig. 3    eine weitere Ausführungsform einer erfindungsgemäßen Maschine der Tabak verarbeitenden Industrie,

Fig. 4    schematisch dargestellte Messsignale von vier verwendeten Sensoren,

Fig. 5    eine statistische Darstellung des Auftretens verschiedener Längendifferenzen und

Fig. 6    eine schematische Darstellung zur Erläuterung eines Messprinzips.

Im Rahmen der Erfindung sind Merkmale, die mit "insbesondere" oder "vorzugsweise" gekennzeichnet sind, als fakultative Merkmale zu verstehen.

In den Zeichnungen sind jeweils gleiche oder gleichartige Elemente und/oder Teile mit denselben Bezugsziffern versehen, so dass von einer erneuten Vorstellung jeweils abgesehen wird.

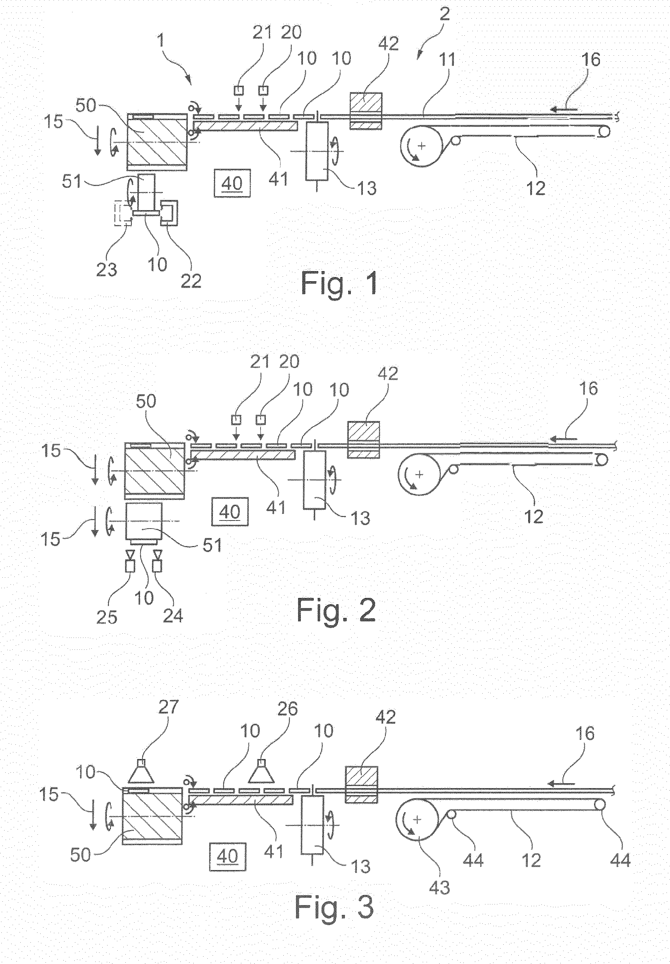

Fig. 1 zeigt schematisch eine erfindungsgemäße Maschine 1 der Tabak verarbeitenden Industrie umfassend eine Strangmaschine 2. Bei der Strangmaschine 2 kann es sich beispielsweise um eine Filterstrangmaschine handeln. Es wird ein Strang 11 auf übliche Weise hergestellt, beispielsweise aus einem Filteracetattow. Der Strang 11 wird in Förderrichtung 16 gefördert, und zwar durch eine Formatvorrichtung, die in Fig. 1 nicht dargestellt ist, durch die allerdings ein Formatband 12 geführt wird, um eine Umhüllung und Formung des Strangs 11 zu ermöglichen.

Es ist eine Sensorvorrichtung 42 gezeigt, die einer üblichen Sensorvorrichtung entsprechen kann und mittels der beispielsweise eine Dichte des Strangs 11 gemessen werden kann. Anschließend ist eine Ablängvorrichtung 13 in Form eines rotierenden Messerapparates vorgesehen, der den Filterstrang 11 in die stabförmigen Produkte 10 möglichst gleicher Länge abschneidet. Die stabförmigen Produkte 10 werden auf einer Förderbahn 41 in Längsrichtung weitergefördert, und zwar an den beiden Sensoren 20 und 21 vorbei. Die Sensoren 20, 21 sind als Ortssensoren ausgebildet. Ortssensoren sind beispielsweise Sensoren, die eine kleine Fläche eines stabförmigen Produkts, beispielsweise optisch, abtasten und die Intensität der von der Fläche abgestrahlten Strahlung aufnehmen.

Die beiden Sensoren 20, 21 sind vorzugsweise in einem Abstand angeordnet, die der Länge der stabförmigen Produkte 10 entspricht. Vorstehend wurde schon erläutert, wie mittels dieser beiden Sensoren beim längsaxialen Fördern der stabförmigen Produkte 10 die Länge bzw. eine Längenabweichung Δl gemessen werden kann.

Die Messwerte werden einer schematisch dargestellten Auswertevorrichtung 40 zugeführt, die nach Auswertung der Messsignale ein Signal erzeugt, um eine Steuerung oder Regelung eines Betriebsparameters der Strangmaschine, der Einfluss auf die Länge des stabförmigen Produktes hat, auszugeben.

Die stabförmigen Produkte 10 werden anschließend in eine Einstoßtrommel eingebracht und von da ab queraxial abgefördert, und zwar zu einer Messtrommel 51, die die stabförmigen Produkte 10 so hält, dass die Au-ßenbereiche frei bleiben. Mit entsprechenden Sensoren 22 und 23, die eine Abschattung der Endbereiche der stabförmigen Produkte 10 messen, kann genau die Länge des stabförmigen Produktes 10 bestimmt werden. Wenn alternativ in Fig. 1 die stabförmigen Produkte 10 auf der Messtrommel 51 linksbündig an einem Anschlag anliegen, kann auf den Sensor 23 verzichtet werden. Der Abstand des Sensors 22 zum Anschlag muss bekannt sein, um eine genaue Bestimmung der Länge der stabförmigen Produkte 10 zu ermöglichen oder der Abstand der beiden Sensoren 22 und 23 zueinander.

Anstelle der Einstoßtrommel können die stabförmigen Produkte auch beispielsweise mit einer sogenannten Spinne oder anderen bekannten Vorrichtungen von einer längsaxialen Förderrichtung in eine queraxiale Förderrichtung überführt werden.

Fig. 2 zeigt eine alternative Ausführungsform der erfindungsgemäßen Maschine. Hier werden an der Messtrommel 51 zwei Sensoren 24 und 25 verwendet, die die Oberfläche der stabförmigen Produkte 10 ermitteln, um so die Kanten erkennen zu können. Auch hier sind die beiden Sensoren 24, 25 mit einem definierten Abstand zueinander angeordnet. Bei den beiden Ausführungsformen der Fig. 1 und 2 können die Messungen während der längsaxialen Förderung als auch während der queraxialen Förderung alternativ zueinander verwendet werden oder ergänzend. Bei einer ergänzenden Verwendung ist insgesamt eine größere Genauigkeit möglich, da eine bessere Mittelung der Messwerte stattfinden kann.

Fig. 3 stellt eine schematische Darstellung einer weiteren erfindungsgemäßen Maschine dar, bei der Sensoren 26 und 27 vorgesehen sind, die als Kamera ausgebildet sind. Es können auch Liniendetektoren Verwendung finden, die in längsaxialer Richtung der stabförmigen Produkte 10 ausgerichtet sind. Die Sensoren 26 und 27 nehmen ein gesamtes Bild der jeweiligen stabförmigen Produkte auf und können in dem Moment, in dem das stabförmige Produkt im gesamten Bild vorliegt, über eine entsprechende Kalibrierung und beispielsweise über eine Anzahl an Pixeln, auf die in längsaxialer Richtung von Kante zu Kante ein Abbild aufgenommen wird, eine Längenermittlung ermöglichen. Dies kann sowohl in einer längsaxialen Förderrichtung geschehen, nämlich mit dem Sensor 26, als auch in einer queraxialen Förderung mit dem Sensor 27. Bei Verwendung einer Kamera 26 kann zudem über das Verfolgen der entsprechenden Kanten der stabförmigen Produkte 10 auf dem Bild auch die Geschwindigkeit der stabförmigen Produkte 10 bestimmt werden. Die Längenbestimmung kann auch über eine Bildverarbeitung geschehen.

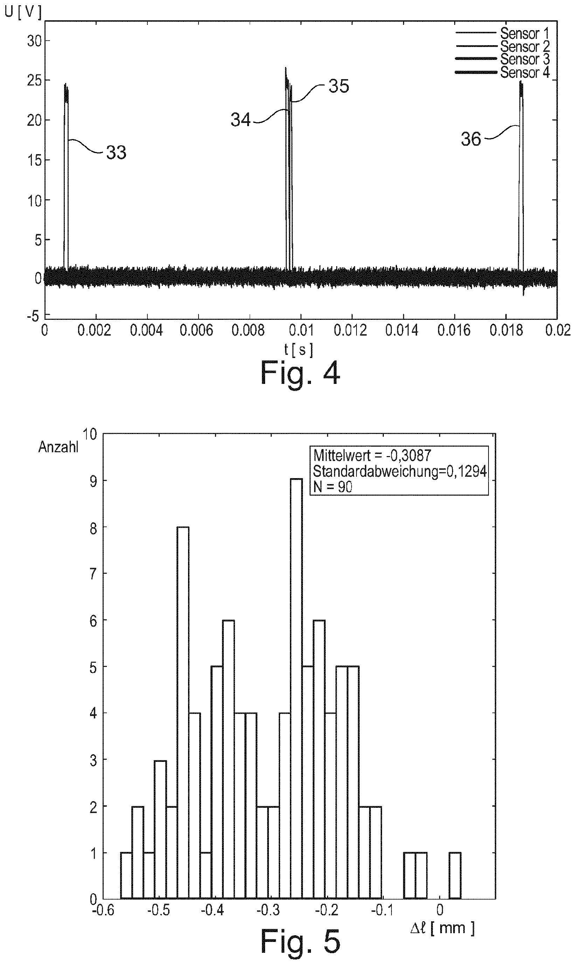

Fig. 4 zeigt schematisch einen Signalverlauf von vier verschiedenen Sensoren. Die Signalverläufe haben die Bezugsziffern 33 bis 36. Auf der Ordinate ist eine Spannung aufgetragen und auf der Abszisse die Zeit in Sekunden. Die Spannung ist in Volt. Es sind entsprechende Sensoren vorgesehen, die jeweils zueinander den gleichen Abstand aufweisen. Es können beispielsweise die Sensoren an den Orten S1, S2, S3 und S4 der Fig. 6 hier vorgesehen sein, die die entsprechenden Messsignale 33 bis 36 erzeugen. Diese Sensoren sind beispielsweise in einem Abstand von 30 mm zueinander angeordnet. Das zu vermessende stabförmige Produkt hat hier eine Länge, die kleiner als 120 mm ist, um eine entsprechende Messung nur mit diesen vier Sensoren zu ermöglichen. Es können dann mit den Messsignalen vier Längendifferenzen Δl bestimmt werden über $\Delta l_1 = t_{13} : t_{23} \cdot s_{23}$, $\Delta l_2 = t_{13} : t_{43} \cdot s_{34}$ und $\Delta l_3 = t_{13} : t_{42} \cdot s_{24}$. Die Längendifferenzen können dann gemittelt werden. Die Mittelungswerte können entsprechend aufgetragen werden in einer Häufigkeitsstatistik, die beispielsweise in Fig. 5 dargestellt ist. Dort ist auf der Ordinate die Anzahl der vorliegenden spezifischen Längendifferenzen gezeigt und auf der Abszisse die Längendifferenz Δl. Es wurden hier 90 Mittelwerte von Messwerten verwendet. Der Mittelwert liegt bei -0,3807 mm und eine Standardabweichung liegt bei 0,1294 mm.

Um die Genauigkeit zu erhöhen, wird jeweils nur eine steigende Flanke aus Fig. 4 oder eine fallende Flanke für die Längenbestimmung verwendet. Es kann natürlich auch die mittlere Zeitposition des Maximums verwendet werden. Die steigenden oder fallenden Flanken sind allerdings für die Messung stabiler. Ein genaues Ergebnis wird natürlich dann erzielt, wenn eine größere Anzahl an Messwerten bzw. Mittelwerten als in Fig. 5 verwendet wird.

Fig. 5 zeigt, dass die Abweichung von der Länge l, also die Längendifferenz Δl, relativ groß ist. Die vermessenen stabförmigen Produkte 10 haben hier eine zu kleine Länge, was für eine zu geringe Stranggeschwindigkeit spricht oder eine zu schnelle Schneidgeschwindigkeit bzw. einen zu schnellen Takt der Schneidvorrichtung. Eine zu langsame Stranggeschwindigkeit kann beispielsweise an einem Verschleiß des Formatbandes liegen, da der Schlupf des Strangs mit dem Formatband zu groß geworden ist. In diesem Fall kann entweder die Geschwindigkeit des Formatbandes erhöht werden oder es können Maßnahmen ergriffen werden, die dafür sorgen, dass der Schlupf verringert wird. Beispielsweise kann eine Deckleiste der Formatvorrichtung etwas mehr zum Unterformat herangedrückt werden, um so eine größere Kraft des Strangs auf das Formatband zu erzeugen, um so den Schlupf zu verringern. Dies kann vorzugsweise online, d.h. während des Betriebs der Strangmaschine automatisch geschehen. Entsprechend können auch andere Parameter automatisch durch die Messwerte der Längen angepasst werden.

Die Erfindung wurde vorstehend unter Bezugnahme auf die Zeichnungen im Zusammenhang mit einer Strangmaschine der Tabak verarbeitenden Industrie erläutert. Es kann stattdessen auch eine Strangmaschine der Trinkhalmindustrie vorgesehen sein, wobei in diesem Fall anstelle eines Filterstrangs ein Hohlrohr als Strang in der Strangmaschine hergestellt wird, danach das Hohlrohr in Trinkhalme abgelängt wird und die Trinkhalme entsprechend weiter gefördert und vermessen werden. Die Maschinenelemente, die sich zur Herstellung eines Filterstabes eignen, können auch für die Herstellung von Trinkhalmen verwendet werden. Die Figuren 1 bis 6 und die zugehörige Figurenbeschreibung eignen sich somit auch zur Erläuterung der Erfindung für Trinkhalme. Das hergestellte stabförmige Produkt kann auch ein Trinkhalm sein.

Erfindungsgemäße Ausführungsformen können durch einzelne Merkmale oder eine Kombination mehrerer Merkmale erfüllt sein. In jedem Fall wird die Erfindung durch den Schutzbereich der Ansprüche festgelegt.

Bezugszeichenliste

| | |
|---|---|
| 1 | Maschine der Tabak verarbeitenden Industrie |
| 2 | Strangmaschine |
| 10 | stabförmiges Produkt |
| 11 | Strang |
| 12 | Formatband |
| 13 | Ablängvorrichtung |
| 14 | Längsachse |
| 15 | queraxiale Förderrichtung |
| 16 | längsaxiale Förderrichtung |
| 20 - 27 | Sensor |
| 30 | Produktoberfläche |
| 31, 32 | Außenkante |
| 33, 34, 35, 36 | Messsignal |
| 40 | Auswertevorrichtung |
| 41 | Förderbahn |
| 42 | Sensorvorrichtung |

| 43 | Antriebsrolle |
| 44 | Umlenkrolle |
| 50 | Einstoßtrommel |
| 51 | Messtrommel |
| Δl | Längendifferenz |
| l | Länge |
| v | Geschwindigkeit |
| v' | Geschwindigkeit |

## Patentansprüche

1. Verfahren zum Betreiben einer Maschine (1) der Tabak verarbeitenden Industrie oder einer Maschine zur Herstellung von Trinkhalmen, wobei die Maschine (1) wenigstens eine Strangmaschine (2), insbesondere der Tabak verarbeitenden Industrie oder der Trinkhalmindustrie, umfasst, wobei zunächst ein Strang (11) hergestellt wird und der Strang (11) in eine Mehrzahl von stabförmigen Produkten (10) der Tabak verarbeitenden Industrie oder Trinkhalmindustrie abgelängt wird, wobei anschließend im laufenden Betrieb der Maschine (1) die Länge (l) der stabförmigen Produkte (10) gemessen wird und auf Basis wenigstens eines Messwertes oder mehrerer Messwerte der Länge (l) des stabförmigen Produkts (10) ein Betriebsparameter der Strangmaschine (2), der Einfluss auf die Länge (l) der stabförmigen Produkte (10) hat, gesteuert oder geregelt wird, wobei das Messen der Länge (l) der stabförmigen Produkte (10) während des längsaxialen Förderns der stabförmigen Produkte (10) geschieht, wobei wenigstens zwei Ortssensoren (20, 21) vorgesehen sind, mittels derer über eine Intensitätsmessung von elektromagnetischen Strahlen jeweils ein zeitlich variables Signal gemessen wird, wobei über den Abstand der Ortssensoren (20, 21) und den Zeitpunkt von Intensitätsschwankungen, die oberhalb einer vorgebbaren Größe liegen, die Länge des jeweiligen stabförmigen Produkts (10) bestimmt wird.

2. Verfahren nach Anspruch 1, **dadurch gekennzeichnet, dass** der Betriebsparameter eine Fördergeschwindigkeit (v) des Strangs (11), eine Fördergeschwindigkeit (v') eines Formatbandes (12) der Strangmaschine (2) oder ein Takt oder eine Geschwindigkeit einer Ablängvorrichtung (13) ist.

3. Verfahren nach Anspruch 1 oder 2, **dadurch gekennzeichnet, dass** eine statistische Auswertung der Längenmesswerte mehrerer stabförmiger Produkte (10) durchgeführt wird.

4. Verfahren nach Anspruch 3, **dadurch gekennzeichnet, dass** in Abhängigkeit einer Veränderung des Mittelwertes und/oder der Standardabweichung der Längenmesswerte, insbesondere mehrerer stabförmiger Produkte (10), der Betriebsparameter gesteuert oder geregelt wird.

5. Verfahren nach Anspruch 3 oder 4, **dadurch gekennzeichnet, dass** bei einer Verteilung der Messwerte, die von einer Normalverteilung abweicht, der Betriebsparameter, insbesondere periodisch, an die Form der Abweichung angepasst wird.

6. Verfahren nach einem der Ansprüche 1 bis 5, **dadurch gekennzeichnet, dass** das Messen der Länge (l) der stabförmigen Produkte (10) während des Förderns der stabförmigen Produkte (10) in einer Richtung quer zur Längsachse (14) der stabförmigen Produkte (10) geschieht, wobei insbesondere mittels einer Abschattung der stabförmigen Produkte (10) eine Position wenigstens einer Außenkante (31, 32) der stabförmigen Produkte (10) bestimmt wird oder mittels wenigstens eines Sensors (20, 21, 22, 23, 24, 25, 26,27), der eine Produktoberfläche (30) abtastet, die Position wenigstens einer Au-ßenkante (31, 32) der stabförmigen Produkte (10) ermittelt wird.

7. Verfahren nach einem der Ansprüche 1 bis 6, **dadurch gekennzeichnet, dass** mittels einer Kamera (26), die insbesondere ein Bild über die gesamte Länge (l) eines stabförmigen Produktes (10) aufnimmt, die Länge (l) bestimmt wird.

8. Maschine (1) zur Herstellung von stabförmigen Produkten (10) der Tabak verarbeitenden Industrie oder der Trinkhalmindustrie, wobei die Maschine (1) eine Strangmaschine (2) umfasst, mittels der ein Strang (11) der Tabak verarbeitenden Industrie oder der Trinkhalmindustrie herstellbar ist, wobei eine Ablängvorrichtung (13) vorgesehen ist, mittels der die stabförmigen Produkte (10) von dem Strang (11) ablängbar sind, wobei eine Längenmessvorrichtung (20 - 27) vorgesehen ist, die ausgebildet ist, die Länge der stabförmigen Produkte (10) zu messen, **dadurch gekennzeichnet, dass** eine Auswertevorrichtung (40) vorgesehen ist, die die Messwerte, die durch die Längenmessvorrichtung (20 - 27) ermittelt worden sind oder ermittelt werden, auswertet, wobei die Auswertevorrichtung (40) ausgebildet ist, ein Signal zur Steuerung oder Regelung eines Betriebsparameters der Strangmaschine (1), der Einfluss auf die Länge (11) der stabförmigen Produkte (10) hat, auszugeben, wobei das Messen der Länge (l) der stabförmigen Produkte (10) während des längsaxialen Förderns der stabförmigen Produkte (10) geschieht, wobei wenigstens zwei Ortssensoren (20, 21) vorgesehen sind, mittels derer über eine Intensitätsmessung von elektromagnetischen Strahlen jeweils ein zeitlich variables Signal gemessen wird, wobei über den Abstand der Ortssensoren (20, 21) und den Zeitpunkt von Intensitätsschwankungen, die oberhalb einer vorgebbaren Größe liegen, die Länge des jeweiligen stabförmigen Produkts (10) bestimmt wird.

9. Maschine (1) nach Anspruch 8, **dadurch gekennzeichnet, dass** die Auswertevorrichtung (40) ein Signal an eine Maschinensteuerung der Strangmaschine (1) ausgebend ausgebildet ist.

10. Maschine (1) nach Anspruch 8 oder 9, **dadurch gekennzeichnet, dass** die Auswertevorrichtung (40) zur Erzeugung des Signals einen Mittelwert einer vorgebbaren Anzahl an Längenmesswerten bildet.

11. Maschine (1) nach einem der Ansprüche 8 bis 10, **dadurch gekennzeichnet, dass** die Längenmessvorrichtung (20 - 27) in der Strangmaschine (2) stromabwärts der Ablängvorrichtung (13) angeordnet ist.

12. Maschine (1) nach einem der Ansprüche 8 bis 11, **dadurch gekennzeichnet, dass** die Längenmessvorrichtung (20 - 27) stromabwärts der Strangmaschine (2) in einem Bereich vorgesehen ist, in der die stabförmigen Produkte (10) queraxial förderbar sind.

13. Maschine (1) nach einem der Ansprüche 8 bis 12, **dadurch gekennzeichnet, dass** in einer längsaxialen Förderbahn (41) der stabförmigen Produkte (10) eine Welle vorgesehen ist.

## Claims

1. A method for operating a machine (1) for the tobacco processing industry or a machine for manufacturing drinking straws, wherein the machine (1) comprises at least one rod-making machine (2), in particular from the tobacco processing industry or the drinking straw industry, wherein one rod (11) is manufactured at first and the rod (11) is cut to length into a plurality of rod-shaped products (10) for the tobacco processing industry or drinking straw industry, wherein subsequently, while the machine (1) is being operated, the length (l) of the rod-shaped products (10) is measured and on the basis of at least one measured value or multiple measured values of the length (l) of the rod-shaped product (10), an operating parameter of the rod-making machine (2) is controlled in an open-loop or closed-loop manner, the operating parameter influencing the length (l) of the rod-shaped products (10), wherein measuring the length (l) of the rod-shaped products (10) occurs during the longitudinal conveying of the rod-shaped products (10), wherein at least two location sensors (20, 21) are provided, by means of which a temporal variable signal is measured in each case using an intensity measurement of electromagnetic beams, wherein the length of each of the rod-shaped products (10) is determined using the distance of the location sensors (20, 21) and the point in time of intensity fluctuations which exceed a specifiable size.

2. The method according to Claim 1, **characterized in that** the operating parameter is a conveying speed (v) of the rod (11), a conveying speed (v') of a garniture tape (12) of the rod-making machine (2) or a cycle or a speed of a cutting device (13).

3. The method according to Claim 1 or 2, **characterized in that** a statistical evaluation of the measured values of the length of multiple rod-shaped products (10) is performed.

4. The method according to Claim 3, **characterized in that** depending on a change of the average value and/or the standard deviation of the measured values of the length, in particular of multiple rod-shaped products (10), the operating parameter is controlled in an open-loop or closed-loop manner.

5. The method according to Claim 3 or 4, **characterized in that** for a distribution of the measured values that deviates from a normal distribution, the operating parameter is adjusted, in particular periodically, to the shape of the deviation.

6. The method according to any one of Claims 1 to 5, **characterized in that** measuring the length (l) of the rod-shaped products (10) occurs while the rod-shaped products (10) are conveyed in a direction transverse to the longitudinal axis (14) of the rod-shaped products (10), wherein in particular a position of at least one outer edge (31, 32) of the rod-shaped products (10) is determined using shading of the rod-shaped products (10) or the position of at least one outer edge (31, 32) of the rod-shaped products (10) is detected using at least one sensor (20, 21, 22, 23, 24, 25, 26, 27) which scans a product surface (30).

7. The method according to any one of Claims 1 to 6, **characterized in that** the length (l) is determined using a camera (26) which in particular records an image over the whole length (l) of a rod-shaped product (10).

8. A machine (1) for manufacturing rod-shaped products (10) for the tobacco processing industry or the drinking straw industry, wherein the machine (1) comprises a rod-making machine (2), by means of which a rod (11) from the tobacco processing industry or the drinking straw industry can be manufactured, wherein a cutting device (13) is provided by means of which the rod-shaped products (10) can be cut to length from the rod (11), wherein a length measuring device (20-27) is provided which is designed to measure the length of the rod-shaped products (10), **characterized in that** an evaluation device (40) is provided that evaluates the measured values which are or have been detected using the length measuring device (20-27), wherein the evaluation device (40) is designed to output a signal for controlling an operating parameter of the rod-making machine (1) in an open-loop or closed-loop manner, the operating parameter influencing the length (11) of the rod-shaped products (10), wherein measuring the length (l) of the rod-shaped products (10) occurs while the rod-shaped products (10) are conveyed along the longitudinal axis, wherein at least two location sensors (20, 21) are provided, by means of which a temporal variable signal is measured in each case using an intensity measurement of electromagnetic beams, wherein the length of each of the rod-shaped products (10) is determined using the distance of the location sensors (20, 21) and the point in time of intensity fluctuations which exceed a specifiable size.

9. The machine (1) according to Claim 8, **characterized in that** the evaluation device (40) is designed for outputting a signal to a machine controller of the rod-making machine (1).

10. The machine (1) according to any one of Claims 8 or 9, **characterized in that** the evaluation device (40) forms an average value of a specifiable number of measured values of the length for generating the signal.

11. The machine (1) according to any one of Claims 8 to 10, **characterized in that** the length measuring device (20-27) is arranged in the rod-making machine (2) downstream of the cutting device (13).

12. The machine (1) according to any one of Claims 8 to 11, **characterized in that** the length measuring device (20-27) is provided downstream of the rod-making machine (2) in a region in which the rod-shaped products (10) can be conveyed along the transversal axis.

13. The machine (1) according to any one of Claims 8 to 12, **characterized in that** a wave is provided in a longitudinal axis conveyance track (41) of the rod-shaped products (10).

## Revendications

1. Procédé de fonctionnement une machine (1) de l'industrie de traitement du tabac ou une machine de fabrication de pailles pour boire, la machine (1) comprenant au moins une machine (2) à former des tiges, en particulier de l'industrie de traitement du tabac ou de l'industrie des pailles pour boire, une tige (11) étant d'abord fabriquée et la tige (11) étant découpée en une pluralité de produits (10) en forme de tige de l'industrie de traitement du tabac ou de l'industrie des pailles pour boire, la longueur (l) des produits (10) en forme de tige étant ensuite mesurée pendant le fonctionnement de la machine (1) et, sur la base d'au moins une valeur de mesure ou de plusieurs valeurs de mesure de la longueur (l) du produit (10) en forme de tige, un paramètre de fonctionnement de la machine (2) à former des tiges, qui a une influence sur la longueur (l) des produits (10) en forme de tige, étant commandé ou régulé, la mesure de la longueur (l) des produits (10) en forme de tige s'effectuant pendant le transport des produits (10) en forme de tige selon l'axe longitudinal, au moins deux capteurs locaux (20, 21) étant prévus, au moyen desquels un signal variable dans le temps est respectivement mesuré par une mesure d'intensité de rayons électromagnétiques, la longueur du produit respectif (10) en forme de tige étant déterminée par la distance des capteurs locaux (20, 21) et le moment de variations d'intensité qui se situent au-dessus d'une grandeur apte à être prédéfinie.

2. Procédé selon la revendication 1, **caractérisé en ce que** le paramètre de fonctionnement est une vitesse de transport (v) de la tige (11), une vitesse de transport (v') d'une bande de format (12) de la machine (2) à former des tiges ou une cadence ou une vitesse d'un dispositif (13) de coupe à longueur.

3.  Procédé selon la revendication 1 ou la revendication 2, **caractérisé en ce qu'**est effectuée une évaluation statistique des valeurs de mesure de longueur de plusieurs produits (10) en forme de tige.

4.  Procédé selon la revendication 3, **caractérisé en ce que** le paramètre de fonctionnement est commandé ou réglé en fonction d'une variation de la valeur moyenne et/ou de l'écart-type des valeurs de mesure de longueur, en particulier de plusieurs produits (10) en forme de tige.

5.  Procédé selon la revendication 3 ou la revendication 4, **caractérisé en ce que**, lorsque la distribution des valeurs de mesure s'écarte d'une distribution normale, le paramètre de fonctionnement est adapté, notamment de façon périodique, à la forme de l'écart.

6.  Le procédé selon l'une des revendications 1 à 5, **caractérisé en ce que** la mesure de la longueur (l) des produits (10) en forme de tige est effectuée pendant le transport des produits (10) en forme de tige dans une direction transversale à l'axe longitudinal (14) des produits (10) en forme de tige, une position d'au moins un bord extérieur (31, 32) des produits (10) en forme de tige étant notamment déterminée au moyen d'un ombrage des produits (10) en forme de tige ou la position d'au moins un bord extérieur (31, 32) des produits (10) en forme de tige étant déterminée au moyen d'au moins un capteur (20, 21, 22, 23, 24, 25, 26, 27) qui balaye une surface de produit (30).

7.  Procédé selon l'une des revendications 1 à 6, **caractérisé en ce que** la longueur (l) est déterminée au moyen d'une caméra (26) qui prend notamment une image sur toute la longueur (l) d'un produit (10) en forme de tige.

8.  Machine (1) pour la fabrication de produits (10) en forme de tige de l'industrie de traitement du tabac ou de l'industrie des pailles pour boire, la machine (1) comprenant une machine (2) à former des tiges, au moyen de laquelle une tige (11) de l'industrie de traitement du tabac ou de l'industrie des pailles pour boire est apte à être fabriquée, un dispositif (13) de coupe à longueur étant prévu, au moyen duquel les produits (10) en forme de tige sont aptes à être coupés à longueur à partir de la tige (11), un dispositif (20 - 27) de mesure de longueur étant prévu, lequel est conçu pour mesurer la longueur des produits (10) en forme de tige, **caractérisé en ce qu'**un dispositif d'évaluation (40) est prévu, lequel évalue les valeurs de mesure qui ont été ou sont déterminées par le dispositif (20 - 27) de mesure de longueur, le dispositif d'évaluation (40) étant conçu pour émettre un signal pour la commande ou la régulation d'un paramètre de fonctionnement de la machine (2) à former des tiges, qui a une influence sur la longueur (11) des produits (10) en forme de tige, la mesure de la longueur (l) des produits (10) en forme de tige s'effectuant pendant le transport longitudinal axial des produits (10) en forme de tige, au moins deux capteurs locaux (20, 21) étant prévus, au moyen desquels un signal variable dans le temps est respectivement mesuré par une mesure d'intensité de rayons électromagnétiques, la longueur du produit respectif (10) en forme de tige étant déterminée par la distance des capteurs locaux (20, 21) et le moment de variations d'intensité qui se situent au-dessus d'une grandeur apte à être prédéfinie.

9.  Machine (1) selon la revendication 8, **caractérisée en ce que** le dispositif d'évaluation (40) est conçu pour émettre un signal vers une commande de machine de la machine (2) à former des tiges.

10. Machine (1) selon la revendication 8 ou la revendication 9, **caractérisée en ce que** le dispositif d'évaluation (40) forme une valeur moyenne d'un nombre prédéfinissable de valeurs de mesure de longueur pour générer le signal.

11. Machine (1) selon l'une des revendications 8 à 10, **caractérisée en ce que** le dispositif (20 - 27) de mesure de longueur est disposé dans la machine (2) à former des tiges en aval du dispositif (13) de coupe à longueur.

12. Machine (1) selon l'une des revendications 8 à 11, **caractérisée en ce que** le dispositif (20 - 27) de mesure de longueur est prévu en aval de la machine (2) à former des tiges, dans une zone dans laquelle les produits (10) en forme de tige sont aptes à être transportés transversalement à l'axe.

13. Machine (1) selon l'une quelconque des revendications 8 à 12, **caractérisée en ce qu'**une ondulation est prévue dans une voie (41) d'axe longitudinal de transport des produits (10) en forme de tige.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1397961 B1
- WO 03055338 A2
- US 20070117700 A1
- US 6264591 B1